# EUROPEAN PATENT SPECIFICATION

(11) **EP 2 889 707 B1**
(45) Date of publication and mention of the grant of the patent: **18.10.2017**
(21) Application number: 14196053.4
(22) Date of filing: 03.12.2014
(51) Int. Cl.: G05B 19/042, G05B 19/05

(54) **Control device and communication control method**
Steuerungsvorrichtung und Kommunikationssteuerungsverfahren
Dispositif de commande et procédé de commande de communication

(30) Priority: 26.12.2013 JP 2013270477
(43) Date of publication of application: 01.07.2015
(73) Proprietor: OMRON CORPORATION, Kyoto, Kyoto 600-8530 (JP)
(72) Inventor: Kitamura, Yasuhiro, Kyoto, Kyoto 600-8530 (JP); Takeuchi, Yoshitaka, Kyoto, Kyoto 600-8530 (JP)
(74) Representative: Horn Kleimann Waitzhofer Patentanwälte PartG mbB

(56) References cited:
- JP-A- 2011 039 643
- JP-A- 2013 242 629

## Description

### TECHNICAL FIELD

The present invention relates to a control system including a controller which periodically executes a user program and more particularly to a control system which is communicably connected to a server device.

### BACKGROUND ART

Machines or facilities to be used at many production sites are typically controlled by a control system configured mainly by a control device such as a programmable logic controller (hereinafter referred to as a "PLC") or the like. Such a control system can verify failures occurring in system configurations or operations afterwards.

The PLC described in Japanese Unexamined Patent Publication No. 2011-39643 as the prior art related to the control device is configured by a CPU and one or more extension units connected to the CPU, and functions as an FTP (File transfer Protocol) client in file transfer. The PLC accepts an input of set data which causes the PLC to function as the FTP client, and stores the set data which is accepted to be input. The PLC stores function assignment information including flag information about whether a predetermined function is assigned to the FTP client or not, and writes the flag information every predetermined function. In the case in which the PLC detects the write of the flag information, it executes the file transfer based on the stored set data.

JP 2011-39643 A shows a programmable controller with a provision unit to perform file transfer process based on stored setting data after writing of flag information for each preset function allocated to a file transfer protocol (FTP) client.

### PRIOR ART DOCUMENT

### PATENT DOCUMENT

Patent Document 1: Japanese Unexamined Patent Publication No. 2011-39643

In the PLC to be used in the control of production facilities, the FTP client function is used in a scene in which data on the production facilities is transmitted to a server device (an FTP server). In this case, a user changes a value of set information to be used in utilization of the FTP. For example, a user can change various variables to be file transfer targets (a directory name, a file name and the like), various variables for designating a transfer destination (an IP address of the FTP server, a directory name of the FTP server, a user ID and a password) and the like.

Referring to the Japanese Unexamined Patent Publication No. 2011-39643, it is necessary to prestore these set information to be changing targets and to connect a dedicated personal computer, thereby changing the setting in the change of the set information. In the case in which the change is carried out by using a dedicated tool, moreover, a system or a unit should be reset or initialized and the change cannot be carried out during an operation of a control program. In order to carry out the setting, furthermore, it is necessary to use the dedicated tool. If there is no dedicated tool or there is no skill for carrying out the setting by the dedicated tool, inconvenience is given to a user.

In consideration of the problems, it is an object of the invention to provide a control device capable of changing a set information value to be used in utilization of a communication protocol such as an FTP also during execution of a control program, and a communication control method in the control device.

### MEANS FOR SOLVING THE PROBLEM

This object is achieved by the independent claims. Advantageous embodiments emerge from the dependent claims.

### EFFECT OF THE INVENTION

According to the invention, it is possible to make the change during the execution of the control program or after creation of the user program, that is, causing a user to create a set information value which is to be used in utilization of a communication protocol such as an FTP. Moreover, the user can create such a program as to be changeable following the set information.

### BRIEF DESCRIPTION OF THE DRAWINGS

Fig. 1 is a schematic diagram showing a system configuration of a control system 1 according to an embodiment;
Fig. 2 is a schematic diagram showing a hardware configuration indicative of a main part of a PLC 100 according to the embodiment;
Fig. 3 is a schematic diagram showing a software configuration that implements various functions offered by the PLC 100 according to the embodiment;
Fig. 4 is a diagram for explaining an example of a hardware configuration of a programmable display unit 300;
Fig. 5 is a schematic diagram showing a hardware configuration of a server device 400;
Fig. 6 is a diagram for explaining a type of an FTP client communication instruction;
Fig. 7 is a diagram representing an example of a user program 186;
Figs. 8A and 8B are diagrams for explaining an input variable and an output variable of an FTPGetFileList instruction;
Figs. 9A and 9B are diagrams for explaining an input variable and an output variable of an FTPPutFile instruction;
Fig. 10 is a diagram for explaining a functional structure of the PLC 100;
Fig. 11 is a diagram representing values of a part of the input variables in the FTPPutFile instruction;
Fig. 12 is a flowchart representing a schematic processing flow to be performed in execution of an FTP client communication instruction;
Fig. 13 is a diagram representing a processing flow in execution of the FTPGetFileList instruction and the FTPPutFile instruction in this order by the PLC 100;
Fig. 14 is a flowchart representing the details of processing in step S112 of Fig. 13,
Figs. 15A, 15B and 15C are diagrams representing an operation screen (UI: UserInterface) displayed on a touch screen 318 of the programmable display unit 300;
Fig. 16 is a diagram for explaining processing of determining whether a file which intentionally is not transferred because of an overlapping file name can be transferred again or not; and
Fig. 17 is a diagram representing a user program 186 having a structure for rewriting a value of each input variable from the user program 186.

### MODE FOR CARRYING OUT THE INVENTION

An embodiment according to the invention will be described in detail with reference to the drawings. The same or corresponding portions in the drawings have the same reference numbers and description thereof will not be repeated.

### <A. System Configuration>

First, a system configuration of a control system according to the embodiment will be described. In the embodiment, the description will be given of a programmable logic controller (PLC) configured to control a control target such as a machine or a facility, as a typical example of a control device. However, the control device according to the invention is not restricted to the PLC but can be applied to various control devices.

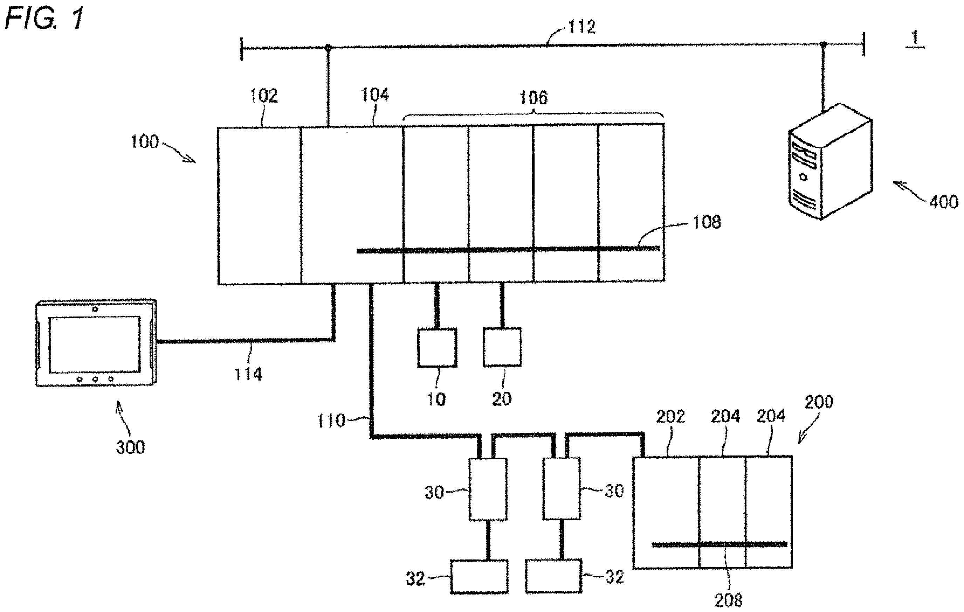

Fig. 1 is a schematic diagram showing a system configuration of a control system 1 according to the embodiment. With reference to Fig. 1, the control system 1 includes a PLC 100, a programmable display unit (HMI: Human Machine Interface) 300 communicably connected to the PLC 100, and a server device 400 communicably connected to the PLC 100. The server device 400 serves to configure intranet, for example.

The PLC 100 communicates with the server device 400 via a communication based on an FTP (a file transfer protocol), which will be described below in detail. In other words, the PLC 100 has an FTP client function and functions as an FTP client. Moreover, the server device 400 has an FTP server function and functions as an FTP server.

The PLC 100 executes the following user program periodically or on an event basis. The user program is created by a user of the PLC 100. The user can create a program (a source program) including an access instruction by operating a support device (not shown), for example. The support device converts the source program into an executable format in the PLC 100 and transmits the converted user program to the PLC 100. The support device offers functions such as setting of various parameters, programming, monitoring or debugging together with the PLC 100. Typically, the PLC 100 and the support device are communicably configured in accordance with USB (Universal Serial Bus) standards.

The PLC 100 executes the user program and communicates with the server device 400 in accordance with an instruction included in the user program. In other words, the PLC 100 and the server device 400 are configured to exchange data through a network 112 such as Ethernet (registered trademark). The details of the processing will be described later.

The PLC 100 includes a CPU 104 configured to execute a control operation and at least one IO (Input/Output) unit 106. These units are configured to exchange data each other through a PLC system bus 108. Moreover, a power having a proper voltage is supplied to these units by a power supply unit 102.

In the control system 1, the PLC 100 exchanges data together with various field apparatuses through the IO unit 106 (connected through the PLC system bus 108) and/or a field bus 110. These field apparatuses include an actuator configured to perform some processing over a control target, a sensor configured to acquire various information from the control target, and the like. In Fig. 1, the field apparatus includes a detection switch 10, a relay 20, and a servo motor driver 30 configured to drive a motor 32 as an example. Moreover, the PLC 100 also has a remote IO terminal 200 connected thereto through the field bus 110. The remote 10 terminal 200 basically performs processing related to general input/output processing in the same manner as the IO unit 106. More specifically, the remote IO terminal 200 includes a communication coupler 202 for performing processing related to data transmission through the field bus 110 and at least one IO unit 204. These units are configured to exchange data each other through a remote IO terminal bus 208.

The programmable display unit 300 is communicably connected to the PLC 100 through a connection cable 114. The programmable display unit 300 displays, on a screen, various type of information acquired from the PLC 100. Moreover, the user operates the programmable display unit 300, thereby enabling change of the input variable values stored in the PLC 100, which will be described below in detail.

### <B. Structure of PLC 100>

### (b1. Hardware Configuration)

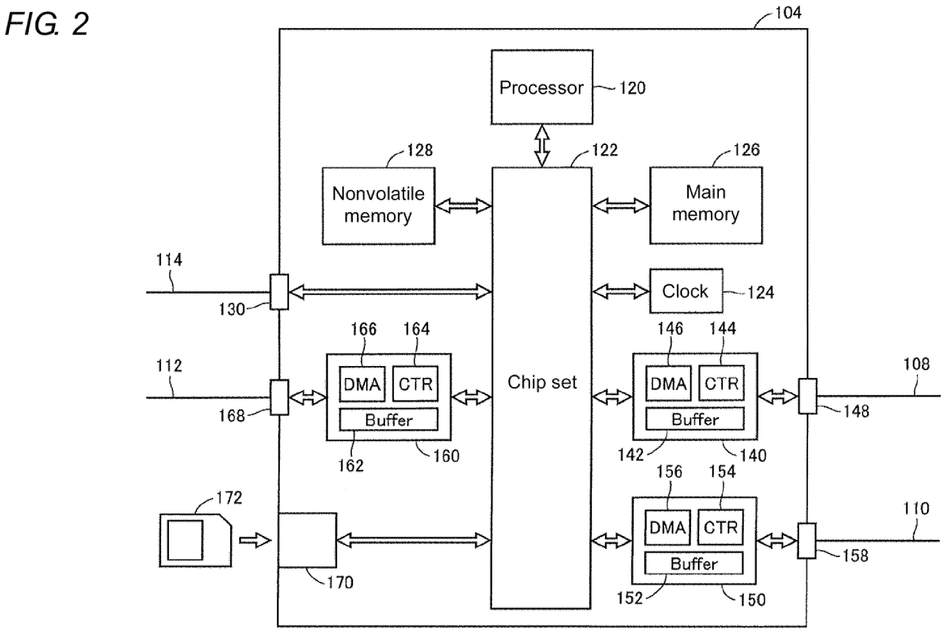

Fig. 2 is a schematic diagram showing a hardware configuration indicative of a main part of the PLC 100 according to the embodiment. With reference to Fig. 2, description will be given to a hardware configuration of the CPU 104 in the PLC 100. The CPU 104 includes a processor 120, a chip set 122, a system clock 124, a main memory 126, a nonvolatile memory 128, an Ethernet connector 130, a PLC system bus controller 140, a field bus controller 150, a host communication controller 160, a memory card interface 170, and a USB connector (not shown). The chip set 122 and other components are coupled to each other through various buses.

The processor 120 and the chip set 122 are typically configured according to a general-purpose computer architecture. In other words, the processor 120 interprets and executes an instruction code supplied sequentially from the chip set 122 in accordance with an internal clock. The chip set 122 exchanges internal data together with various components which are connected thereto, and furthermore, generates a necessary instruction code for the processor 120. The system clock 124 generates a system clock in a predetermined cycle and offers the system clock to the processor 120. The chip set 122 has a function for caching data obtained as a result of execution of arithmetic processing in the processor 120 or the like.

The CPU 104 has a main memory 126 and a nonvolatile memory 128 as storage units. The main memory 126 is a volatile storage area, and holds various programs to be executed by the processor 120 and is also used as a working memory in execution of the various programs. The nonvolatile memory 128 holds an OS (Operating system), a system program, a user program, log information and the like in a nonvolatile manner.

The Ethernet connector 130 is an interface configured to connect the programmable display unit 300 to the CPU 104. A USB connector (not shown) is an interface configured to connect a support device to the CPU 104. Typically, an executable program transferred from the support device or the like is fetched into the CPU 104 through the USB connector.

The CPU 104 has, as communicating units, a PLC system bus controller 140, a field bus controller 150, and a host communication controller 160. These communication circuits transmit and receive data.

The PLC system bus controller 140 controls data exchange through the PLC system bus 108. More specifically, the PLC system bus controller 140 includes a buffer memory 142, a PLC system bus control circuit 144, and a DMA (Dynamic Memory Access) control circuit 146. The PLC system bus controller 140 is connected to the PLC system bus 108 through a PLC system bus connector 148.

The field bus controller 150 includes a buffer memory 152, a field bus control circuit 154, and a DMA control circuit 156. The field bus controller 150 is connected to the field bus 110 through a field bus connector 158. The host communication controller 160 includes a buffer memory 162, a host communication control circuit 164, and a DMA control circuit 166. The host communication controller 160 is connected to the network 112 through a host communication connector 168.

The memory card interface 170 connects a memory card 172 which can be attached to and removed from the CPU 104, and the processor 120.

### (b2. Software Configuration)

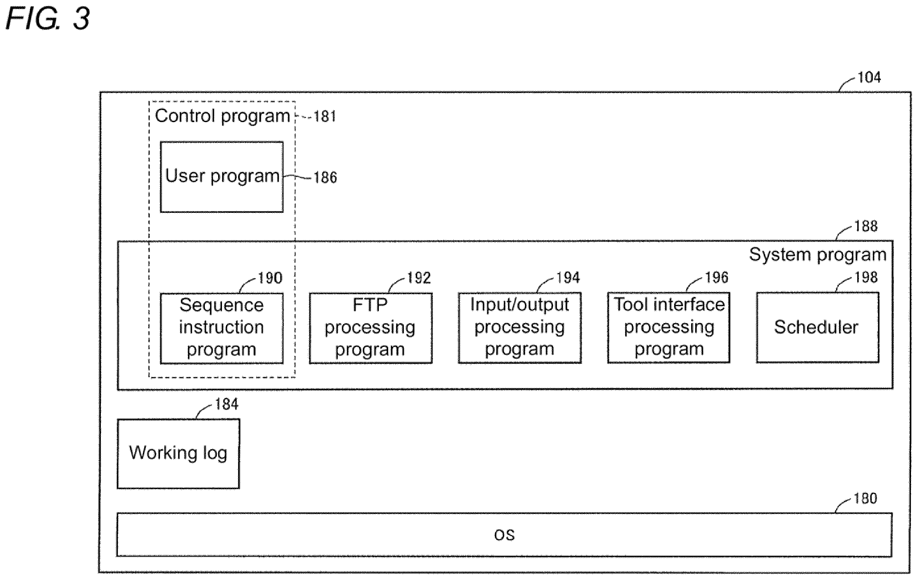

Fig. 3 is a schematic diagram showing a software configuration for implementing various functions offered by the PLC 100 according to the embodiment. An instruction code in the software is read in a proper timing and is executed by the processor 120 of the CPU 104.

With reference to Fig. 3, software to be executed by the CPU 104 includes the OS 180, the system program 188, and the user program 186.

The OS 180 offers a basic execution environment for the processor 120 to execute the system program 188 and the user program 186.

The system program 188 is a software group for offering a basic function of the PLC 100. Specifically, the system program 188 includes a sequence instruction program 190, an FTP processing program 192, an input/output processing program 194, a Tool interface processing program 196, and a scheduler 198.

On the other hand, the user program 186 is optionally created in response to a control purpose for a control target. In other words, the user program 186 is optionally designed depending on the target to be controlled by the control system 1.

The user program 186 implements a control purpose of a user in cooperation with the sequence instruction program 190. In other words, a programmed operation is implemented by utilizing an instruction, a function, a function module and the like offered by the sequence instruction program 190. For this reason, the user program 186 and the sequence instruction program 190 will also be referred to as the "control program 181".

When a predetermined event occurs with the execution of the system program 188 and the user program 186, information about the occurring event is stored in a working log 184 in relation to time information. In other words, various information about the execution of the system program 188 and/or the user program 186 are stored as a log (history information) in the working log 184.

Each program will be described below in more detail.

The sequence instruction program 190 includes an instruction code group for calling an entity of a sequence instruction designated in the user program 186 with the execution of the user program 186 and implementing a content of the instruction.

The input/output processing program 194 serves to manage acquirement of input data and transmission of output data together with the IO unit 106 or various field apparatuses.

The Tool interface processing program 196 offers an interface for data exchange together with the support device.

The scheduler 198 generates a thread or a procedure for executing a control program in accordance with a predetermined priority, a value of a system timer, or the like.

The user program 186 is created depending on the control purpose of the user as described above. The user program 186 typically takes an object program format which can be executed in the processor 120 of the CPU 104. The user program 186 is generated by compiling a source program described in a ladder format or a function block format in the support device or the like. Then, the generated user program 186 in the object program format is transferred from the support device to the CPU 104 and is stored in the nonvolatile memory 128 or the like.

The FTP processing program 192 includes an instruction code group for implementing necessary processing for communicating with the server device 400 with the execution of the user program 186. The FTP processing program 192 includes an execution code corresponding to an instruction which can be designated in the user program 186.

### <C. Hardware Configuration of Programmable Display Unit 300>

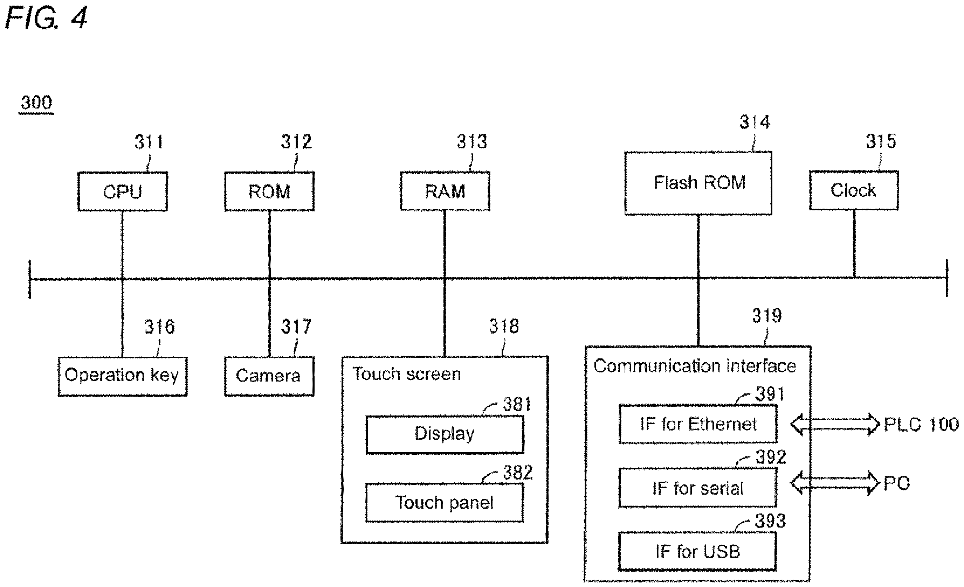

Fig. 4 is a diagram for explaining an example of a hardware configuration of the programmable display unit 300. With reference to Fig. 4, the programmable display unit 300 includes a CPU (Central Processing Unit) 311 for carrying out various operations, an ROM (Read Only Memory) 312, an RAM (Random Access Memory) 313, a flash ROM 314 for storing various programs in a nonvolatile manner, a clock 315, an operation key 316, a camera 317, a touch screen 318, and a communication interface 319. These portions are connected to each other through an internal bus.

The touch screen 318 has a display 381 and a touch panel 382 disposed to cover the display 381. The communication interface 319 has an IF (InterFace) for Ethernet (registered trademark) 391, an IF for serial 392, and an IF for USB (Universal Serial Bus) 393.

The CPU 311 expands a program stored in the flash ROM 314 into the RAM 313 or the like and executes the expanded program. The ROM 312 generally stores a program of an OS (Operating System) or the like. The RAM 313 is a volatile memory which is used as a work memory.

The IF for Ethernet 391 supports a communication protocol of the Ethernet and performs a data communication together with the PLC 100. The IF for serial 392 supports a serial communication protocol and performs a data communication together with a PC (Personal Computer), for example. The IF for USB 393 supports a USB communication protocol and performs a data communication together with a USB memory, for example.

Each component configuring the programmable display unit 300 shown in Fig. 4 is general. Accordingly, an essential part of the invention can be software stored in a memory such as the flash ROM 314 or software which can be downloaded through a network. Since each operation of hardware of the programmable display unit 300 is well-known, detailed description will not be repeated.

### <D. Hardware Configuration of Server Device 400>

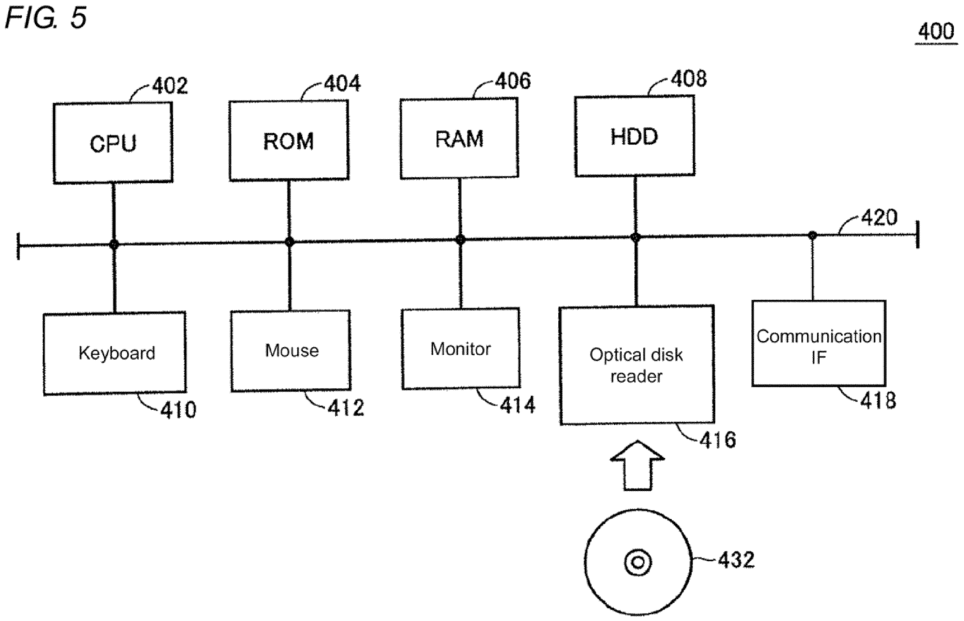

Fig. 5 is a schematic diagram showing a hardware configuration of the server device 400. The server device 400 is typically configured by a general-purpose computer.

With reference to Fig. 5, the server device 400 includes a CPU 402 configured to execute various programs including an OS, an ROM (Read Only Memory) 404 configured to store BIOS and various data, a memory RAM 406 configured to offer a work area for storing necessary data for execution of a program in the CPU 402, and a hard disk (HDD) 408 configured to store a program to be executed by the CPU 402 or the like in a nonvolatile manner.

The server device 400 further includes a keyboard 410 and a mouse 412 which accept an operation from a user, and a monitor 414 configured to present information to the user. In addition, the server device 400 includes a communication interface (IF) 418 configured to perform a communication with the PLC 100 (the CPU 104) or the like. The server device 400 is communicably connected to the PLC 100 by the communication IF 418.

### <E. Summary of Processing in Control System 1 >

The PLC 100 has the FTP client function as described above, and can transfer (upload) a file in the memory card 172 from the PLC 100 serving as an FTP client to the server device 400 serving as an FTP server in an intranet by using an FTP client communication instruction. Moreover, it is also possible to transfer (download) the file from the server device 400 to the PLC 100.

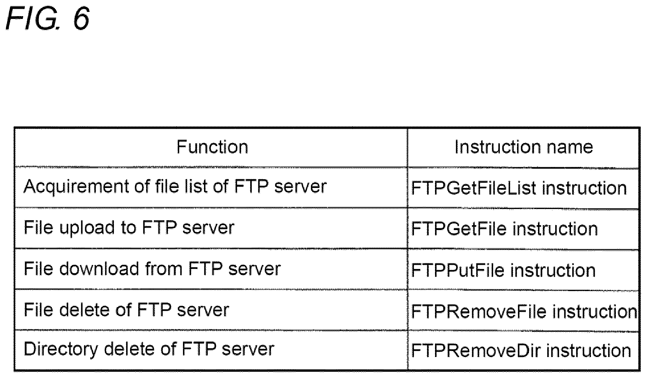

Fig. 6 is a diagram for explaining a type of the FTP client communication instruction. With reference to Fig. 6, the PLC 100 has, as the

FTP client function, a file list acquiring function of an FTP server, a file uploading function to the FTP server, a file downloading function from the FTP server, a file deleting function of the FTP server, and a directory deleting function of the FTP server.

Names of instructions (FTP client communication instructions) for implementing the file list acquiring function of the FTP server, the file uploading function to the FTP server, the file downloading function from the FTP server, the file deleting function of the FTP server, and the directory deleting function of the FTP server will also be referred to as an "FTPGetFileList instruction", an "FTPGetFile instruction", an "FTPPutFile instruction", an "FTPRemoveFile instruction", and an "FTPRemoveDir instruction", respectively.

Each of the "FTPGetFileList instruction", the "FTPGetFile instruction", the "FTPPutFile instruction", the "FTPRemoveFile instruction", and the "FTPRemoveDir instruction" is offered as a function block. The user can include the respective instructions in the user program 186. The PLC 100 executes the user program 186, thereby implementing the FTP client function.

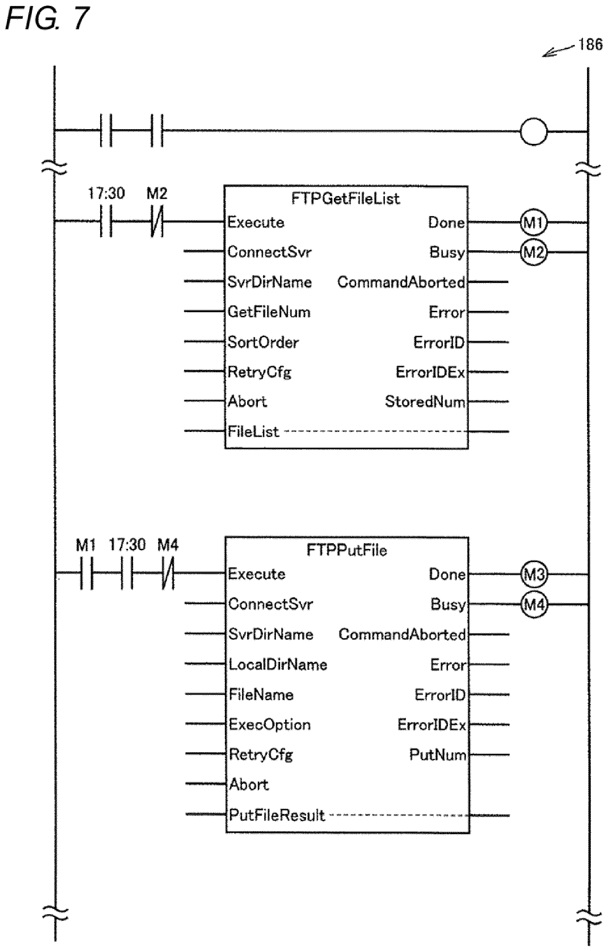

Fig. 7 is a diagram representing an example of the user program 186. With reference to Fig. 7, the user program 186 includes a function block of the FTPGetFileList instruction and a function block of the FTPPutFile instruction.

Referring to the user program 186 shown in Fig. 7, the FTPGetFileList instruction is executed in a condition of 17 : 30 and no "Busy". In other words, the PLC 100 executes processing for acquiring a file list from the server device 400. When the execution of the FTPGetFileList instruction is completed, the FTPPutFile instruction is executed. In other words, the PLC 100 executes processing for transferring a file to the server device 400.

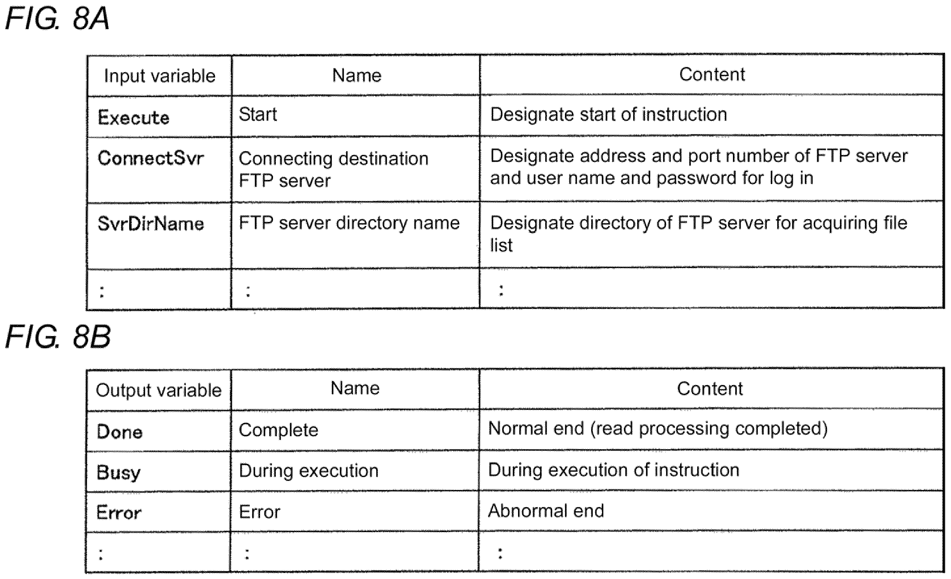

Figs. 8A and 8B are diagrams for explaining an input variable and an output variable of the FTPGetFileList instruction. Specifically, Fig. 8A is a diagram for explaining a part of input variables of the FTPGetFileList instruction. Fig. 8B is a diagram for explaining a part of output variables of the FTPGetFileList instruction.

With reference to Fig. 8A, "Execute" representing start is an input variable for designating start of the FTPGetFileList instruction. "ConnectSvr" representing an FTP server to be a connecting destination is an input variable for designating an address and a port number of the FTP server and a user name and a password for log in. "SvrDirName" representing a directory name of the FTP server is an input variable for designating a directory of the FTP server to acquire a file list.

With reference to Fig. 8B, "Done" representing completion is an output variable for indicating normal end (that is, read is completed). "Busy" representing under-execution is an output variable for indicating that the instruction is being executed. "Error" representing an error is an output variable for indicating abnormal end.

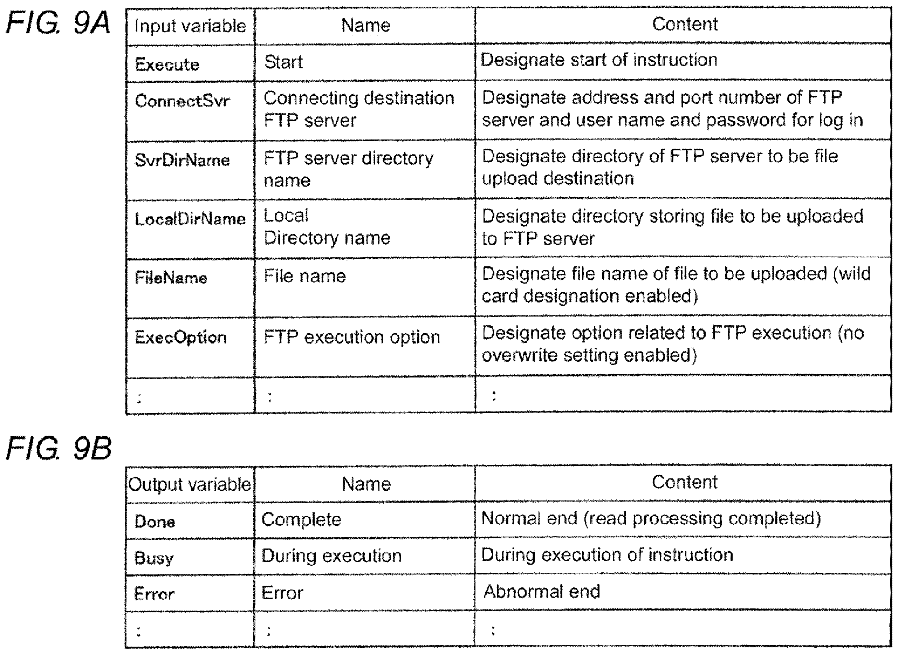

Figs. 9A and 9B are diagrams for explaining an input variable and an output variable of the FTPPutFile instruction. Specifically, Fig. 9A is a diagram for explaining a part of the input variables of the FTPPutFile instruction. Fig. 9B is a diagram for explaining a part of the output variables of the FTPPutFile instruction.

With reference to Fig. 9A, "Execute" representing start is an input variable for designating start of the FTPPutFile instruction. "ConnectSvr" representing an FTP server to be a connecting destination is an input variable for designating an address and a port number of the FTP server and a user name and a password for log in. "SvrDirName" representing a directory name of the FTP server is an input variable for designating a directory of the FTP server to acquire a file list.

"LocalDirName" representing a local directory name is an input variable for designating a directory (a directory of the PLC 100) storing a file to be uploaded to the FTP server. "FileName" representing a file name is an input variable for designating a file name of a file to be uploaded. A wild card can also be used for designating the file name.

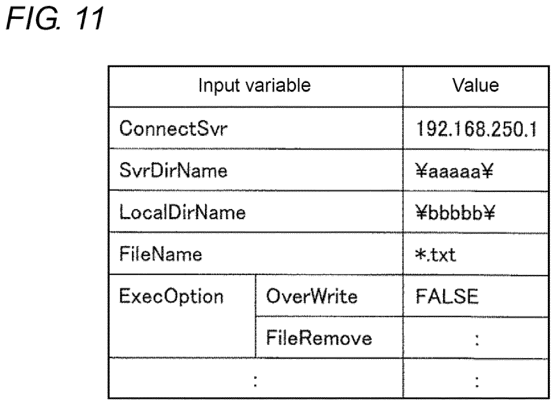

"ExecOption" representing an FTP execution option is an input variable for designating an option related to FTP execution. For example, the "ExecOption" includes an input variable "OverWrite" for designating whether overwrite is permitted or not (see Fig. 11).

With reference to Fig. 9B, "Done" representing completion is an output variable for indicating normal end (that is, read is completed). "Busy" representing under-execution is an output variable for indicating that the instruction is being executed. "Error" representing an error is an output variable for indicating abnormal end.

### <F. Functional Structure>

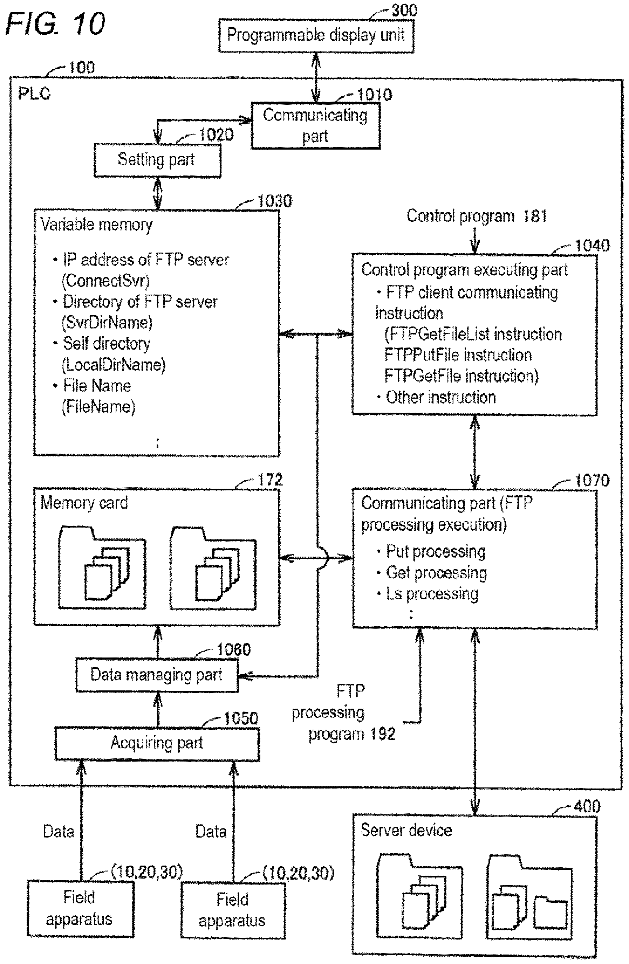

Fig. 10 is a diagram for explaining a functional structure of the PLC 100. With reference to Fig. 10, the PLC 100 includes a communicating part 1010, a setting part 1020, a variable memory 1030, a control program executing part 1040, an acquiring part 1050, a data managing part 1060, a communicating part 1070, and the memory card 172.

When each field apparatus is controlled by executing the control program 181 (in detail, an instruction other than the FTP client communication instruction), the acquiring part 1050 periodically acquires data based on the control from the field apparatus.

The data managing part 1060 writes the data acquired by the acquiring part 1050 to the memory card 172. In detail, the data managing part 1060 sequentially writes the data sequentially acquired by the acquiring part 1050 to a predetermined file stored in the memory card 172. In more detail, the data managing part 1060 classifies the acquired data into a plurality of files (data groups) having different names from each other in accordance with predetermined rules, thereby managing the data. These can be implemented by description in a user program created by the user.

The variable memory 1030 stores a variable referred to in the user program. The variable memory 1030 stores a plurality of input variables to be used in the utilization of the FTP (input variables for FTP setting) and values of the respective input variables correspondingly to each other. Specifically, the variable memory 1030 stores the input variable "ConnectSvr", "SvrDirName", "LocalDirName", "FileName" or the like and a value of the input variable. The "value" is an expression which relates to a variable to be noted and corresponds to a thing indicated by the variable. In other words, the value includes not only the numeric value, but also a character string other than a numeric value. In the embodiment, an IP address of the FTP server is utilized as the input variable "ConnectSvr".

The variable memory 1030 may include a variable having an attributes which is browsed and released to external apparatuses and a variable having an attributes to be used in an inner part.

The control program executing part 1040 executes the control program 181. The control program executing part 1040 executes an FTP communication instruction included in the user program 186 of the control program 181, and other instructions included in the control program 181. In that case, the control program 181 includes, as an input variable, the variable stored in the variable memory 1030 as shown in Fig. 7. In other words, the control program 181 utilizes, as an input, the value of the variable stored in the variable memory 1030. In other words, the control program 181 includes an instruction for transmitting data to the server device 400 with the variable as the input variable. Moreover, the control program executing part 1040 notifies the communicating part 1070 of an execution result of the FTP client communication instruction.

The communicating part 1070 is an interface for communicating with the server device 400 to be the FTP server. The communicating part 1070 executes processing corresponding to the execution result of the control program executing part 1040. For example, the communicating part 1070 executes Put processing based on the FTPPutFile instruction (transfer of a file to the FTP server (upload)), Get processing based on the FTPGetFile instruction (acquirement of a file from the FTP server (download)), and Ls processing based on the FTPGetFileList instruction (acquirement of a file list from the FTP server).

In the Put processing, the communicating part 1070 transfers (transmits) a file designated by the input variable "FileName" in the directory of the memory card 172 specified by the input variable "SvrDirName", to a directory designated by the input variable "SvrDirName" of the FTP server (the server device 400 in the embodiment) specified by the input variable "ConnectSvr" based on the execution result of the control program 181 obtained in the input of the value of the input variable stored in the variable memory 1030. Thus, the PLC 100 transmits data to the server device 400 based on the value of the variable when an instruction is started in order to execute the control program 181.

In the Ls processing, the communicating part 1070 acquires, from the FTP client, a file list included in the directory designated by the input variable "SvrDirName" of the FTP client specified by the input variable "ConnectSvr" (the server device 40 in the embodiment) based on the execution result of the control program 181 with respect to the value of the input variable stored in the variable memory 1030.

The communicating part 1010 is an interface for communicating with the programmable display unit 300. The setting part 1020 sets (updates) the value of the input variable stored in the variable memory 1030 based on a command sent from the programmable display unit 300 with a user operation.

According to the structure described above, the PLC 100 can transmit the data acquired from the field apparatus as a file to the server device 400 by the FTP with the value of the variable used in the FTP as the input variable of the control program. According to the PLC 100, therefore, it is possible to change the value of the variable used in the utilization of the FTP also during the execution of the control program 181.

### (f1. Referring to Option Processing)

Next, the following processing is carried out in the case in which overwrite processing is prohibited in the input variable "ExexOption" in the FTPPutFile instruction (Fig. 9A).

The control program executing part 1040 determines, based on the file list acquired from the server device 400, whether a file having the same name as a name given by the data managing part 1060 is present in the server device 400 or not by the communication with the server device 400 through the communicating part 1070. In detail, the control program executing part 1040 utilizes the file list acquired based on the FTPGetFileList instruction, thereby determining whether a file overlapping with the file included in the directory designated by the input variable "LocalDirName" of the FTPPutFile instruction is present in the directory specified by the input variable "SvrDirName" of the FTPPutFile instruction (the directory of the server device 400) or not.

The communicating part 1070 transmits, to the server device 400, any of the files which is stored in the memory card 172 and is not determined to have the file with the same name based on the execution result of the control program with respect to an input. In detail, the communicating part 1070 transfers, to the directory designated by the input variable "SvrDirName" of the server device 400, any of the files included in the directory specified by the input variable "LocalDirName" which has no file with the same name in the directory designated by the input variable "SvrDirName".

### (f2. Example of Value of Input Variable)

Fig. 11 is a diagram representing the values of a part of the input variables in the FTPPutFile instruction. The value of the input variable in the FTP client communication instruction including the FTPPutFile instruction is set by the user.

With reference to Fig. 11, the value of the input variable "ConnectSvr" representing the IP address of the FTP server, the value of the input variable "SvrDirName" representing the directory name of the FTP server, and the value of the input variable "LocalDirName" representing the directory name of the self device (PLC 100) are "192. 168. 250.1", "¥aaaaa¥", and "", respectively.

Moreover, a file name to be transferred is designated by using the wild card. Specifically, a value of the file name to be transferred represents text data ("*.text") included in the value ("") of the input variable "LocalDirName".

The value of the input variable "Overwrite" is "False" for prohibiting the overwrite. In the case in which the overwrite is permitted, the value of the input variable "Overwrite" is "True".

### <G. Control Structure>

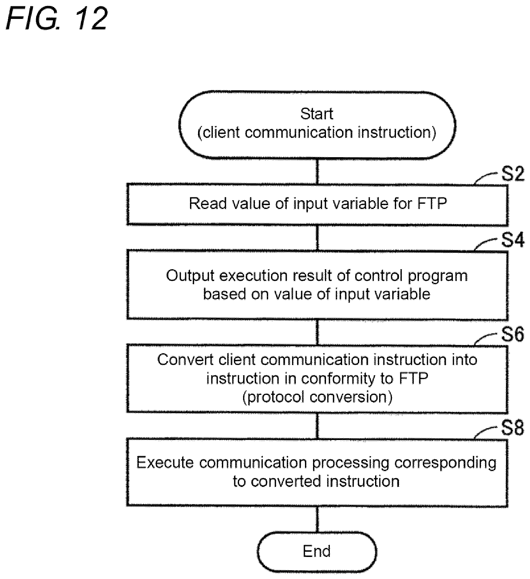

Fig. 12 is a flowchart representing a schematic processing flow to be carried out in the execution of the FTP client communication instruction. With reference to Fig. 12, the processor 120 (Fig. 2) of the PLC 100 reads a value of an input variable for FTP in step S2. In step S4, the processor 120 outputs the execution result of the user program 186 based on the value of the input variable. In step S6, the processor 120 converts the client communication instruction into an instruction in conformity to the FTP (protocol conversion). In step S8, the processor 120 executes communication processing corresponding to the converted instruction.

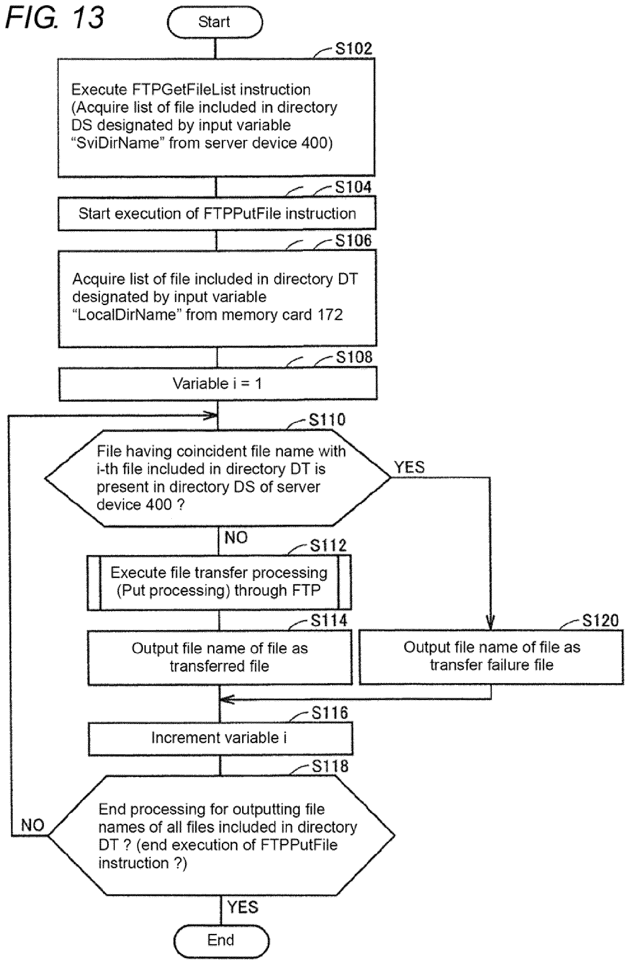

Fig. 13 is a flowchart representing a schematic processing flow in which the PLC 100 executes the user program 186 shown in Fig. 7. In other words, Fig. 13 is a diagram showing a processing flow in which the PLC 100 executes the FTPGetFileList instruction and the FTPPutFile instruction in this order.

With reference to Fig. 13, in step S102, the processor 120 of the PLC 100 executes the FTPGetFileList instruction. Specifically, the processor 120 acquires, from the server device 400, a file list of the files included in the directory (hereinafter referred to as a "directory DS") designated by the input variable "SvrDirName". The server device 400 is an FTP server designated by the input variable "ConnectSvr".

In step S104, the processor 120 starts the execution of the FTPPutFile instruction. In step S106, the processor 120 acquires, from the memory card 172, a file list of the files included in the directory (hereinafter referred to as a "directory DT") designated by the input variable "LocalDirName".

In step S108, the processor 120 sets a value of a predefined variable i to be "1". In step S110, the processor 120 determines, based on the two acquired file lists, whether a file having a coincident file name with an i-th file included in the directory DT is present in the directory DS of the server device 400 or not.

If it is determined that the file is not present (NO in step S110), the processor 120 executes file transfer processing (Put processing) through the FTP in step S112. In step S114, the processor 120 outputs a file name of a transferred file as a value of the output variable "PutFileResult" representing an uploaded file result. If it is determined that the file is present (YES in step S110), the processor 120 outputs a file name of a transfer failure file as a value of the output variable "PutFileResult" in step S120.

In step S116, the processor 120 increments the variable i. In other words, the processor 120 increases a value of i by one. In step S118, the processor 120 determines whether the processing for outputting file names of all files included in the directory DT of the memory card 172 is ended or not. In other words, the processor 120 determines whether the execution of the FTPPutFile instruction is ended or not. If the processor 120 determines that the execution is not ended (NO in step S118), it returns the processing to step S110. If the processor 120 determines that the execution is ended (YES in step S118), it ends the serial processing.

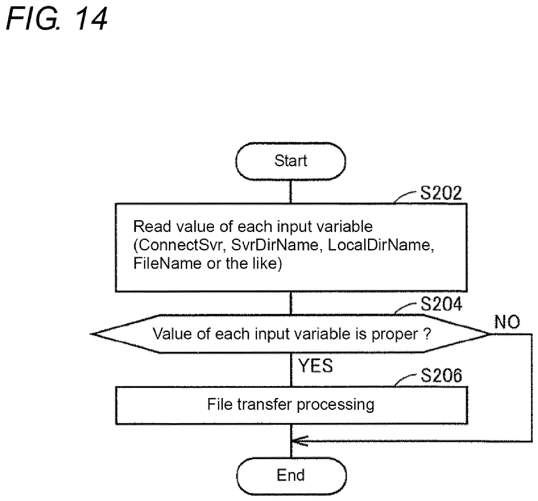

Fig. 14 is a flowchart representing the details of the processing in step S112 of Fig.13. With reference to Fig. 14, in step S202, the processor 120 reads a value of each input variable (ConnectSvr, SvrDirName, LocalDir, FileName or the like) from the variable memory 1030 (Fig. 10). In step S204, the processor 120 determines whether the value of each variable thus read is proper or not.

Specifically, the PLC 100 previously recognizes the IP address of the FTP server configuring a network. For this reason, the processor 120 determines whether the FTP server designated by the input variable "ConnectSvr" is present or not depending on whether the recognized IP address is input or not. If the FTP server is present, moreover, the processor 120 determines whether the directory designated by the input variable "SvrDirName" is present in the FTP server or not. Furthermore, the processor 120 determines whether the directory designated by the input variable "LocalDir" is present in the memory card 172 or not. Moreover, the processor 120 determines whether the file designated by the input variable "Filename" is present in the directory designated by the input variable "LocalDir" or not.

If it is determined that the value is proper (YES in step S204), the processor 120 executes file transfer processing in step S206 and ends the serial processing. If it is determined that the value is not proper (NO in step S204), the processor 120 ends the serial processing.

### <H. Operation Screen of Programmable Display Unit>

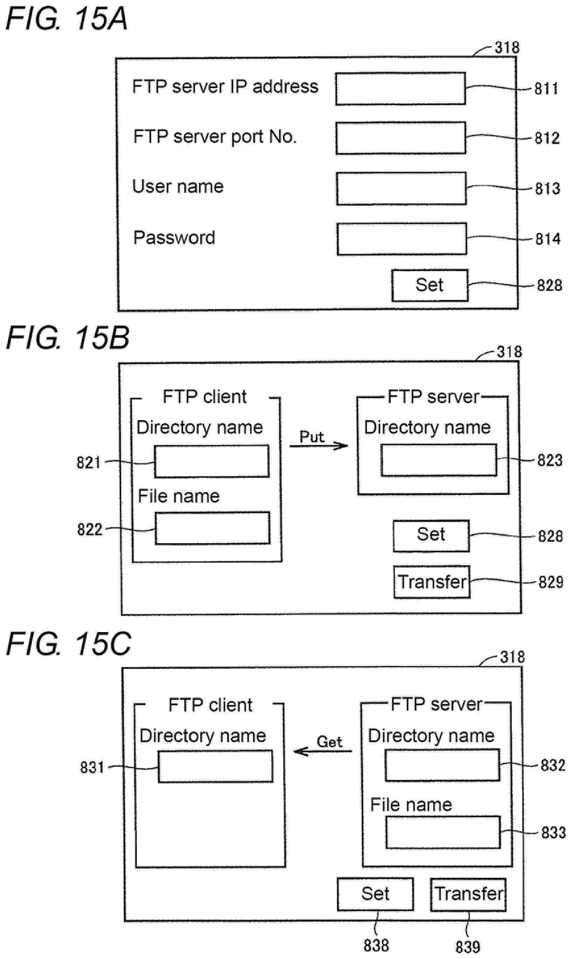

Fig. 15 is a diagram representing an operation screen (UI: UserInterface) displayed on the touch screen 318 of the programmable display unit 300. Fig. 15A shows an operation screen for designating the FTP server. Fig. 15B shows an operation screen for setting the Put processing. Fig. 15C shows an operation screen for setting the Get processing.

With reference to Fig. 15A, the programmable display unit 300 displays, on the touch screen 318, input boxes 811,812,813 and 814 configured to accept the input of the value of the input variable "ConnectSvr" (specifically, the IP address of the FTP server, the port number of the FTP server, the user name and the password as shown in Figs. 8A and 9A) in order to designate the FTP server. The user selects a set button 818 after inputting the value to each of the input boxes 811 to 814, and thus can set (update) the value of the variable stored in the variable memory 1030 (Fig. 10) of the PLC 100.

With reference to Fig. 15B, the programmable display unit 300 displays, on the touch screen 318, the input boxes 821 and 822 configured to accept the input of the values of the input variables "SvrDirName" and "LocalDirName" in order to designate the directory name and the file name in the FTP client (that is, the PLC 100). Moreover, the programmable display unit 300 displays an input box 823 configured to accept the input of the value of the input variable "SvrDirName" in order to designate the directory name of the FTP server.

The user inputs the value to each of the input boxes 821 to 823 and then selects the set button 828, thereby enabling setting (update) of the value of the variable stored in the variable memory 1030 (Fig. 10) in the PLC 100. Moreover, the user selects a transfer button 829, thereby enabling the PLC 100 to execute the Put processing. This can be implemented by executing the FTP instruction when accepting the input from the HMI in the user program.

With reference to Fig. 15C, the programmable display unit 300 displays, on the touch screen 318, an input box 831 configured to accept the input of the value of the input variable "LocalDirName" in order to designate the directory name in the FTP client (that is, the PLC 100). Moreover, the programmable display unit 300 displays input boxes 832 and 833 configured to accept the input of the values of the input variables "SvrDirName" and "FileName" in order to designate the directory name and the file name of the FTP server.

The user inputs the value to each of the input boxes 831 to 833 and then selects a set button 838, thereby enabling setting (update) of the value of the variable stored in the variable memory 1030 (Fig. 10) in the PLC 100. Moreover, the user selects a transfer button 839, thereby enabling the PLC 100 to execute the Get processing. This can be implemented by executing the FTP instruction when accepting the input from the HMI in the user program.

The value of the variable is set (updated) by the setting part 1020 of the PLC 100. The value of the variable is set (updated) also during the execution of the control program 181 as described above. Consequently, the user can change the FTP client communication instruction without interrupting the execution of the control program.

### <I. Re-decision Processing>

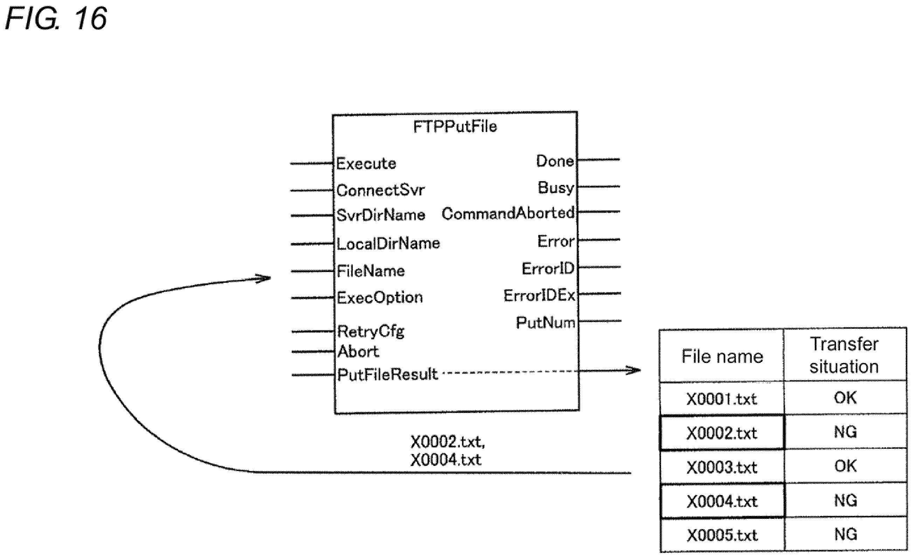

Fig. 16 is a diagram for explaining processing of transmitting a transfer failure file in the case of the execution of the FTPPutFile instruction. In other words, Fig. 16 is a diagram for explaining processing of determining whether a file that intentionally is not transferred because of an overlapping name can be transferred again or not.

With reference to Fig. 16, it is assumed that five files (X001.txt, X002.txt, X003.txt, X004.txt and X005.txt) are designated by the input variable "FileName" in the FTPPutFile instruction. The following is assumed. By the execution of the FTPputFile instruction, then, the transfer of three files (X001.txt, X003.txt and X005.txt) to the server device 400 is completed and the transfer of the two files (X002.txt and X004.txt) fails. In this case, the processor 120 inputs the file names (X002.txt and X004.txt) of the two transfer failure files as the input variable "FileName" to the function block of the FTPputFile instruction again. The file name is input again after the user performs a work for removing a file stored in a transfer target directory of the server device 400 or the like, for example. Specifically, the file name is input again after the erasure of the file stored in the directory designated by the input variable "SvrDirName" or the like.

In other words, the user program 186 further utilizes, as an input, a name of a file (hereinafter referred to as a "second file") other than any of the files which is not determined to have a file with the same name in the directory designated by the server device 400 (which will be hereinafter referred to as a "first file"). Moreover, the control program executing part 1040 shown in Fig. 10 determines again whether the file having the same name as the second file is present in the server device 400 or not through the communication with the server device 400. The communicating part 1070 transmits any of the second files that is not determined to have the file with the same name (which will be hereinafter referred to as a "third file") as a result of the re-decision through the control program executing part 1040 to the designated directory of the server device 400 based on the execution result of the user program 186.

As described above, the PLC 100 automatically determines whether the transfer (transmission) failure file can be transferred again or not. For this reason, the user does not need to set the file name of the transfer failure file as the value of the input variable "FileName".

### <J. Variant of User Program>

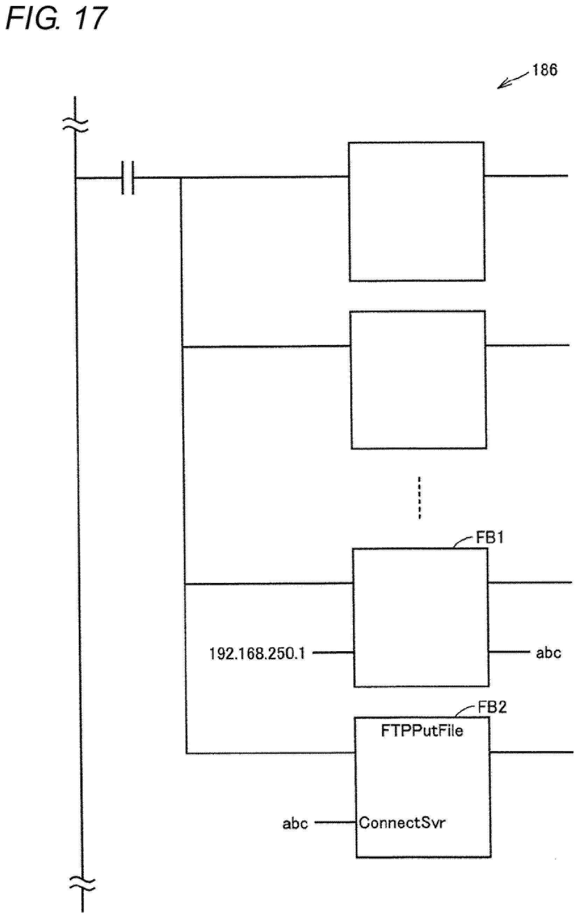

It is also possible to rewrite a value of each input variable through the user program 186 configuring the control program 181. Fig. 17 is a diagram representing the user program 186 having such a structure as to rewrite the value of each input variable from the user program 186. As an example, description will be given by focusing on the designation of the FTP server.

With reference to Fig. 17, a value of an output variable "abc" of a function block FB1 on a function block FB2 of the FTPPutFile instruction is input to the input variable "ConnectSvr" of the FTPPutFile instruction. Moreover, an IP address ("192.168.250.1") of the FTP server is input as the input variable of the function block FB1. Thus, the control program 181 includes the function block FB1 to be description for setting the value of the variable. A value read from the variable memory 1030 (Fig. 10) or a value input directly from the programmable display unit 300 is input as an IP address to the function block FB1.

As described above, the PLC 100 can use, as the value of the input variable of the FTP client communication instruction, the output variable of the function block which is different from the function block of the FTP client communication instruction.

### <K. Communication Protocol>

Although the description has been given by taking the FTP as an example of the communication protocol to be used in the communication between the PLC 100 and the server device 400, the invention is not restricted thereto. The invention can be applied to various communication protocols to be used in a data communication between the PLC 100 and the server device 400.

The embodiment disclosed herein is only illustrative in all respects and should not be construed to be restrictive. The scope of the invention is designated by the appended claims instead of the above description, and it is intended that all changes are contained in the claims and equivalent meanings and ranges.

### DESCRIPTION OF SYMBOLS

- 1: control system
- 10: detection switch
- 20: relay
- 30: servo motor driver
- 32: motor
- 100: PLC
- 104: CPU
- 106: IO unit
- 108: PLC system bus
- 110: field bus
- 112: network
- 114: connection cable
- 120: processor
- 122: chip set
- 124: system clock
- 126: main memory
- 128: nonvolatile memory
- 130: connector
- 140: PCL system bus controller
- 142, 152, 162: buffer memory
- 144: PLC system bus control circuit
- 146: control circuit
- 148: system bus connector
- 150: field bus controller
- 154: field bus control circuit
- 156, 166: DMA control circuit
- 158: field bus connector
- 160: host communication controller
- 164: host communication control circuit
- 168: host communication connector
- 170: memory card interface
- 172: memory card
- 180: OS
- 181: control program
- 184: working log
- 186: user program
- 188: system program
- 190: sequence instruction program
- 192: processing program
- 194: input/output processing program
- 196: interface processing program
- 198: scheduler
- 200: terminal
- 202: communication coupler
- 208: terminal bus
- 300: programmable display unit
- 311, 402: CPU
- 318: touch screen
- 319: communication interface
- 381: display
- 382: touch panel
- 400: server device
- 811 to 814, 821 to 823, 831 to 833: input box
- 818, 828, 838: set button
- 829, 839: transfer button
- 1010, 1070: communicating part
- 1020: setting part
- 1030: variable memory
- 1040: control program executing part
- 1050: acquiring part
- 1060: data managing part
- FB1, FB2: function block

## Claims

1. A control device (100) for controlling a predetermined apparatus by communicating with a server device (400) and executing a control program (181), the control device (100) comprising:
an executing unit (1040) configured to execute the control program (181);
an acquiring unit (1050) configured to acquire data based on a control from the predetermined apparatus;
a first communicating unit (1070) configured to communicate with the server device (400) by using a predetermined communication protocol; and
a memory (1030) configured to store a variable to be used in utilization of the communication protocol and a value of the variable correspondingly to each other,
a second communicating unit (1010) configured to communicate with a programmable display unit (300); and
a setting unit (1020) configured to set the value of the variable based on a command sent from the programmable display unit, **characterized in that** the control program (181) includes an instruction for transmitting the data to the server device (400) with the variable as an input variable,
the first communicating unit (1070) is configured to transmit the data to the server device (400) based on the value of the variable when the instruction is started in order to execute the control program (181), and
the setting unit (1020) is configured to set the value of the variable also during execution of the control program (181).

2. The control device (100) according to claim 1, wherein the control program (181) includes a description for setting the value of the variable.

3. The control device (100) according to claim 1 or 2, wherein
the variable includes a name of data, and
the first communicating unit (1070) transmits, to the server device (400), data having a name of data designated by the variable based on an execution result of the control program (181) with respect to the input.

4. The control device (100) according to any one of claims 1 to 3 further comprising a managing unit (1060) configured to manage the data by classifying the acquired data into a plurality of data groups having different names from each other in accordance with predetermined rules, the managing unit (1060) managing the data groups as files, and
wherein the communication protocol is a file transfer protocol.

5. A communication control method for a control device (100) controlling a predetermined apparatus by communicating with a server device (400) and executing a control program (181), the method comprising the steps of:
causing a processor of the control device (100) to execute the control program (181);
causing the processor to acquire data based on a control from the predetermined apparatus;
causing the processor to communicate with the server device (400) by using a predetermined communication protocol,
causing the processor to communicate with a programmable display unit (300); and
causing the processor to set the value of the variable based on a command sent from the programmable display unit,
wherein
the control device (100) stores a variable to be used in utilization of the communication protocol and a value of the variable correspondingly to each other
**characterized in that**
the control device sets the value of the variable also during execution of the control program (181) and in that the control program (181) includes an instruction for transmitting the data to the server device (400) with the variable as an input variable, and **in that** the communication control method further comprises the step of transmitting the data to the server device (400) based on the value of the variable when the instruction is started in order to execute the control program (181).

## Patentansprüche

1. Steuervorrichtung (100) zum Steuern einer vorgegebenen Vorrichtung durch Kommunizieren mit einer Servervorrichtung (400) und Ausführen eines Steuerprogramms (181), wobei die Steuervorrichtung (100) aufweist:
eine Ausführungseinheit (1040), welche eingerichtet ist, das Steuerprogramm (181) auszuführen;
eine Erfassungseinheit (1050), welche eingerichtet ist, Daten anhand einer Steuerung von der vorgegebenen Vorrichtung zu erfassen;
eine erste Kommunikationseinheit (1070), welche eingerichtet ist, mit der Servervorrichtung (400) unter Verwendung eines vorgegebenen Kommunikationsprotokolls zu kommunizieren; und
einen Speicher (1030), welcher eingerichtet ist, eine Variable, die bei der Verwendung des Kommunikationsprotokolls verwendet werden soll, und einen Wert der Variablen zugehörig zueinander zu speichern,
eine zweite Kommunikationseinheit (1010), welche eingerichtet ist, mit einer programmierbaren Anzeigeeinheit (300) zu kommunizieren; und
eine Einstelleinheit (1020), welche eingerichtet ist, den Wert der Variablen anhand eines von der programmierbaren Anzeigeeinheit gesendeten Befehls festzulegen,
**dadurch gekennzeichnet, dass**
das Steuerprogramm (181) einen Befehl zum Senden der Daten mit der Variablen als Eingabevariable an die Servervorrichtung (400) umfasst,
die erste Kommunikationseinheit (1070) eingerichtet ist, die Daten an die Servervorrichtung (400) anhand des Werts der Variablen beim Start des Befehls zu senden, um das Steuerprogramm (181) auszuführen, und
die Einstelleinheit (1020) eingerichtet ist, den Wert der Variablen auch während der Ausführung des Steuerprogramms (181) festzulegen.

2. Steuervorrichtung (100) gemäß Anspruch 1, wobei das Steuerprogramm (181) eine Beschreibung zum Festlegen des Werts der Variablen umfasst.

3. Steuervorrichtung (100) gemäß Anspruch 1 oder 2, wobei
die Variable einen Datennamen umfasst, und
die erste Kommunikationseinheit (1070) an die Servervorrichtung (400) Daten sendet, welche einen Datennamen aufweisen, der durch die Variable anhand eines Ausführungsergebnisses des Steuerprogramms (181) mit Bezug auf die Eingabe zugeordnet wird.

4. Steuervorrichtung (100) gemäß einem der Ansprüche 1 bis 3, welche ferner eine Verwaltungseinheit (1060) aufweist, welche eingerichtet ist, die Daten durch Klassifizieren der erfassten Daten in eine Mehrzahl von Datengruppen, welche voneinander verschiedene Namen aufweisen, in Übereinstimmung mit vorgegebenen Regeln zu verwalten, wobei die Verwaltungseinheit (1060) die Datengruppen als Dateien verwaltet, und
wobei das Kommunikationsprotokoll ein Dateitransferprotokoll ist.

5. Kommunikationssteuerungsverfahren für eine Steuervorrichtung (100), welche eine vorgegebene Vorrichtung durch Kommunikation mit einer Servervorrichtung (400) und Ausführen eines Steuerprogramms (181) steuert, wobei das Verfahren die folgenden Schritte aufweist:
Veranlassen eines Prozessors der Steuervorrichtung (100) das Steuerprogramm (181) auszuführen;
Veranlassen des Prozessors Daten anhand einer Steuerung von der vorgegebenen Vorrichtung zu erfassen;
Veranlassen des Prozessors mit der Servervorrichtung (400) durch Verwenden eines vorgegebenen Kommunikationsprotokolls zu kommunizieren,
Veranlassen des Prozessors mit einer programmierbaren Anzeigeeinheit (300) zu kommunizieren; und
Veranlassen des Prozessors den Wert der Variablen anhand eines von der programmierbaren Anzeigeeinheit gesendeten Befehls festzulegen,
wobei
die Steuervorrichtung (100) eine Variable speichert, die bei der Anwendung des Kommunikationsprotokolls verwendet werden soll, und einen Wert der Variablen zugehörig zueinander speichert,
**dadurch gekennzeichnet,**
**dass** die Steuervorrichtung den Wert der Variablen auch während der Ausführung des Steuerprogramms (181) festlegt, und
**dass** das Steuerprogramm (181) einen Befehl zum Senden der Daten an die Servervorrichtung (400) mit der Variablen als eine Eingabevariable umfasst, und
**dass** das Kommunikationssteuerverfahren ferner den Schritt des Sendens der Daten an die Servervorrichtung (400) anhand des Werts der Variablen beim Start des Befehls, um das Steuerprogramm (181) auszuführen, aufweist.

## Revendications

1. Dispositif de commande (100) destiné à commander un appareil prédéterminé en communiquant avec un dispositif serveur (400) et en exécutant un programme de commande (181), le dispositif de commande (100) comprenant :
une unité d'exécution (1040) conçue pour exécuter le programme de commande (181) ;
une unité d'acquisition (1050) conçue pour acquérir des données sur la base d'une commande provenant de l'appareil prédéterminé ;
une première unité de communication (1070) conçue pour communiquer avec le dispositif serveur (400) en utilisant un protocole de communication prédéterminé ; et
une mémoire (1030) conçue pour stocker une variable à utiliser lors de l'utilisation du protocole de communication et une valeur de la variable en correspondance l'une avec l'autre,
une seconde unité de communication (1010) conçue pour communiquer avec une unité d'affichage programmable (300) ; et
une unité de réglage (1020) conçue pour régler la valeur de la variable sur la base d'une commande envoyée en provenance de l'unité d'affichage programmable,
**caractérisé en ce que** :
le programme de commande (181) inclut une instruction destinée à transmettre les données au dispositif serveur (400) avec la variable en tant que variable d'entrée,
la première unité de communication (1070) est conçue pour transmettre les données au dispositif serveur (400) sur la base de la valeur de la variable, lorsque l'instruction est lancée afin d'exécuter le programme de commande (181), et
l'unité de réglage (1020) est conçue pour régler la valeur de la variable également au cours de l'exécution du programme de commande (181).

2. Dispositif de commande (100) selon la revendication 1, dans lequel le programme de commande (181) inclut une description destinée à régler la valeur de la variable.

3. Dispositif de commande (100) selon la revendication 1 ou 2, dans lequel :
la variable inclut un nom de données, et
la première unité de communication (1070) transmet au dispositif serveur (400) des données ayant un nom de données désigné par la variable, sur la base d'un résultat d'exécution du programme de commande (181) par rapport à l'entrée.

4. Dispositif de commande (100) selon l'une quelconque des revendications 1 à 3, comprenant en outre une unité de gestion (1060) conçue pour gérer les données en classant les données acquises dans une pluralité de groupes de données ayant des noms de données différents les uns des autres, conformément à des règles prédéterminées, l'unité de gestion (1060) gérant les groupes de données en tant que fichiers, et
dans lequel le protocole de communication est un protocole de transfert de fichiers.

5. Procédé de commande de communication pour dispositif de commande (100) commandant :
un appareil prédéterminé en communiquant avec un dispositif serveur (400) et en exécutant un programme de commande (181), le procédé comprenant des étapes consistant à :
faire exécuter à un processeur du dispositif de commande (100) le programme de commande (181) ;
faire acquérir au processeur des données sur la base d'une commande provenant de l'appareil prédéterminé ;
faire communiquer le processeur avec le dispositif serveur (400) en utilisant un protocole de communication prédéterminé ;
faire communiquer le processeur avec une unité d'affichage programmable (300) ; et
faire régler au processeur la valeur de la variable sur la base d'une commande envoyée en provenance de l'unité d'affichage programmable,
dans lequel :
le dispositif de commande (100) stocke une variable à utiliser lors de l'utilisation du protocole de communication et une valeur de la variable en correspondance l'une avec l'autre,
**caractérisé en ce que** :
le dispositif de commande règle la valeur de la variable également au cours de l'exécution du programme de commande (181), et
**en ce que** le programme de commande (181) inclut une instruction destinée à transmettre les données au dispositif serveur (400) avec la variable en tant que variable d'entrée, et
**en ce que** le procédé de commande de communication comprend en outre l'étape consistant à transmettre les données au dispositif serveur (400) sur la base de la valeur de la variable, lorsque l'instruction est lancée afin d'exécuter le programme de commande (181).
